(19) Europäisches Patentamt
European Patent Office
Office européen des brevets

(11) **EP 4 645 470 A1**

(12) **EUROPEAN PATENT APPLICATION**
published in accordance with Art. 153(4) EPC

(43) Date of publication:
**05.11.2025 Bulletin 2025/45**

(21) Application number: 23911767.4

(22) Date of filing: **14.12.2023**

(51) International Patent Classification (IPC):
*H01M 4/525* (2010.01)   *H01M 4/13* (2010.01)
*H01M 4/36* (2006.01)   *H01M 4/505* (2010.01)
*H01M 4/62* (2006.01)

(52) Cooperative Patent Classification (CPC):
**H01M 4/13; H01M 4/36; H01M 4/505; H01M 4/525;**
**H01M 4/62; Y02E 60/10**

(86) International application number:
**PCT/JP2023/044930**

(87) International publication number:
**WO 2024/142986 (04.07.2024 Gazette 2024/27)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **28.12.2022 JP 2022212647**

(71) Applicant: **Zeon Corporation**
**Tokyo 100-8246 (JP)**

(72) Inventor: **SUGIMOTO, Takumi**
**Tokyo 100-8246 (JP)**

(74) Representative: **Maiwald GmbH**
**Elisenhof**
**Elisenstraße 3**
**80335 München (DE)**

(54) **COMPOSITE PARTICLE, ELECTRODE FOR SECONDARY BATTERY, AND SECONDARY BATTERY**

(57)    Provided are composite particles that can improve flexibility of an electrode and can cause a secondary battery to display excellent battery characteristics. The composite particles are used in dry forming of an electrode for a secondary battery and contain an electrode active material and a binder. The composite particles have an area circularity of not less than 0.50 and not more than 0.93 and have a porosity of not less than 65% and not more than 80%.

EP 4 645 470 A1

**Description**

TECHNICAL FIELD

The present disclosure relates to composite particles, an electrode for a secondary battery, and a secondary battery.

BACKGROUND

Secondary batteries exemplified by non-aqueous electrolyte solution secondary batteries (hereinafter, also referred to simply as "non-aqueous secondary batteries") in which an organic solvent electrolyte is used and all-solid-state secondary batteries in which a solid electrolyte is used instead of an organic solvent electrolyte have characteristics such as compact size, light weight, high energy density, and the ability to be repeatedly charged and discharged, and are used in a wide range of applications. Consequently, in recent years, studies have been made to improve battery members such as electrodes for the purpose of achieving even higher secondary battery performance.

An electrode for a secondary battery normally includes a current collector and an electrode mixed material layer formed on the current collector. Moreover, a dry forming method that does not require a drying step has been studied as a method for producing an electrode for a secondary battery (hereinafter, also referred to simply as an "electrode"). In the dry forming method, composite particles that contain an electrode active material, a binder serving as a binding material, and so forth are subjected to pressure forming on a current collector to form an electrode mixed material layer, for example.

In recent years, there have been attempts to improve composite particles used in dry forming of electrodes with the aim of achieving further improvement of secondary battery performance.

As one specific example, Patent Literature (PTL) 1 discloses a material for electrochemical device electrode formation that contains composite particles containing an electrode active material and a binder, wherein the composite particles have an average surface porosity of 15% or more. According to PTL 1, an electrode that is obtained using this material for electrochemical device electrode formation has improved diffusivity of electrolyte ions and reduced resistance.

CITATION LIST

Patent Literature

PTL 1: JP2015-43342A

SUMMARY

(Technical Problem)

However, an electrode that is formed using the conventional composite particles described above leaves room for improvement in terms of further increasing flexibility of the electrode in situations such as when a laminate including the electrode and a separator is wound up to obtain a roll. Moreover, in a situation in which an electrode mixed material layer is formed through pressure forming of the conventional composite particles described above on a current collector, there has been a problem that excessive pressing pressure may act at protruding sections of the composite particles that have been supplied onto the current collector and that cracking of electrode active material may occur, resulting in deterioration of battery characteristics such as initial capacity and preservation stability.

Accordingly, one object of the present disclosure is to provide composite particles used in dry forming of an electrode for a secondary battery that can improve flexibility of an electrode and that can cause a secondary battery to display excellent battery characteristics (initial capacity and preservation stability).

Another object of the present disclosure is to provide an electrode for a secondary battery that has excellent flexibility and that can cause a secondary battery to display excellent battery characteristics (initial capacity and preservation stability).

Yet another object of the present disclosure is to provide a secondary battery that has excellent battery characteristics.

(Solution to Problem)

The inventor conducted diligent investigation with the aim of solving the problems set forth above. The inventor discovered that by using composite particles that contain an electrode active material and a binder and that have an area circularity and a porosity that are within specific ranges, it is possible to produce an electrode having excellent flexibility through dry forming and to cause a secondary battery to display excellent battery characteristics. In this manner, the inventor completed the present disclosure.

Specifically, with the aim of advantageously solving the problems set forth above, composite particles according to the following {1} to {3}, electrodes for a secondary battery according to the following {4} and {5}, and a secondary battery according to the following {6} are provided according to the present disclosure.

{1} Composite particles used in dry forming of an electrode for a secondary battery, wherein the composite particles comprise an electrode active material and a binder, the composite particles have an area circularity of not less than 0.50 and not more than 0.93, and the composite particles have a porosity of not less than 65% and not more than 80%.

By using composite particles that contain an electrode active material and a binder and that have an area circularity and a porosity that are within the ranges set forth above in dry forming of an electrode, it is possible to improve flexibility of the electrode and cause a secondary battery to display excellent battery characteristics.

Note that "dry forming" of an electrode referred to in the present disclosure indicates a method in which composite particles containing an electrode active material and a binder are pressure formed to form an electrode mixed material layer of an electrode.

Moreover, the "area circularity" and "porosity" of composite particles referred to in the present disclosure can be measured by methods described in the EXAMPLES section of the present specification.

Furthermore, "battery characteristics" of a secondary battery referred to in the present disclosure indicates initial capacity and preservation stability of the secondary battery.

{2} The composite particles according to the foregoing {1}, further comprising a conductive additive.

By using composite particles that further contain a conductive additive, it is possible to even further enhance battery characteristics of a secondary battery.

{3} The composite particles according to the foregoing {1} or {2}, having a volume-average particle diameter of not less than 20 $\mu$m and not more than 250 $\mu$m.

By using composite particles having a volume-average particle diameter that is within the range set forth above, it is possible to even further enhance battery characteristics of a secondary battery. Moreover, it is easier to adjust an electrode to a desired thickness.

Note that the "volume-average particle diameter" of composite particles referred to in the present disclosure can be measured by a method described in the EXAMPLES section of the present specification.

{4} An electrode for a secondary battery comprising an electrode mixed material layer formed using composite particles, wherein the composite particles contain an electrode active material and a binder, a pore distribution curve indicating a relationship between pore diameter and logarithmic derivative pore volume of the electrode mixed material layer that is obtained based on mercury intrusion porosimetry has a first pore peak and a second pore peak, the first pore peak is a peak for which logarithmic derivative pore volume at a maximum of the peak is largest among peaks that are present within a pore diameter range of not less than 0.1 $\mu$m and less than 5 $\mu$m, the second pore peak is a peak for which logarithmic derivative pore volume at a maximum of the peak is largest among peaks that are present within a pore diameter range of not less than 5 $\mu$m and not more than 50 $\mu$m, the logarithmic derivative pore volume at the maximum of the second pore peak when the logarithmic derivative pore volume at the maximum of the first pore peak is taken to be 100% is not less than 10% and less than 55%, and a good product ratio of the electrode active material is 90% or more, given that the good product ratio is defined as the proportion of electrode active material having a surface arithmetic mean roughness (Ra) of 5 $\mu$m or less among electrode active material that is at least partially exposed at a surface of the electrode for a secondary battery.

In the case of an electrode for a secondary battery that includes an electrode mixed material layer formed using composite particles containing an electrode active material and a binder, in which a pore distribution curve of the electrode mixed material layer obtained based on mercury intrusion porosimetry has a first pore peak and a second pore peak, in which logarithmic derivative pore volume at a maximum of the second peak when logarithmic derivative pore volume at a maximum of the first pore peak is taken to be 100% (hereinafter, also referred to simply as a "pore peak ratio") is within the range set forth above, and in which a good product ratio of the electrode active material is not less than the value set forth above, this electrode for a secondary battery has excellent flexibility. Moreover, through this electrode for a secondary battery, it is possible to cause a secondary battery to display excellent battery characteristics.

Note that the "pore distribution curve" based on mercury intrusion porosimetry that is referred to in the present disclosure can be prepared according to a method described in the EXAMPLES section of the present specification.

Moreover, the "logarithmic derivative pore volume" referred to in the present disclosure is a value (dV/dlog D) that is determined by differentiating cumulative pore volume V by the logarithm of pore diameter (log D).

Furthermore, when a peak is said to "be present" within a certain pore diameter range in the present disclosure, this means that "a maximum of that peak is present within the pore diameter range".

Also, the "surface arithmetic mean roughness (Ra)" of an electrode active material referred to in the present disclosure can be measured by a method described in the EXAMPLES section of the present specification.

{5} The electrode for a secondary battery according to the foregoing {4}, wherein the composite particles further contain a conductive additive.

By using composite particles that further contain a conductive additive, it is possible to even further enhance battery characteristics of a secondary battery.

{6} A secondary battery comprising either or both of: an electrode for a secondary battery including an electrode mixed material layer formed using the composite particles according to any one of the foregoing {1} to {3}; and the electrode for a secondary battery according to the foregoing {4} or {5}.

A secondary battery that includes either or both of an electrode including an electrode mixed material layer formed using any of the composite particles set forth above and any of the electrodes set forth above has excellent battery characteristics such as initial capacity and preservation stability.

(Advantageous Effect)

According to the present disclosure, it is possible to provide composite particles used in dry forming of an electrode for a secondary battery that can improve flexibility of an electrode and that can cause a secondary battery to display excellent battery characteristics (initial capacity and preservation stability).

Moreover, according to the present disclosure, it is possible to provide an electrode for a secondary battery that has excellent flexibility and that can cause a secondary battery to display excellent battery characteristics (initial capacity and preservation stability).

Furthermore, according to the present disclosure, it is possible to provide a secondary battery that has excellent battery characteristics (initial capacity and preservation stability).

BRIEF DESCRIPTION OF THE DRAWINGS

In the accompanying drawings:

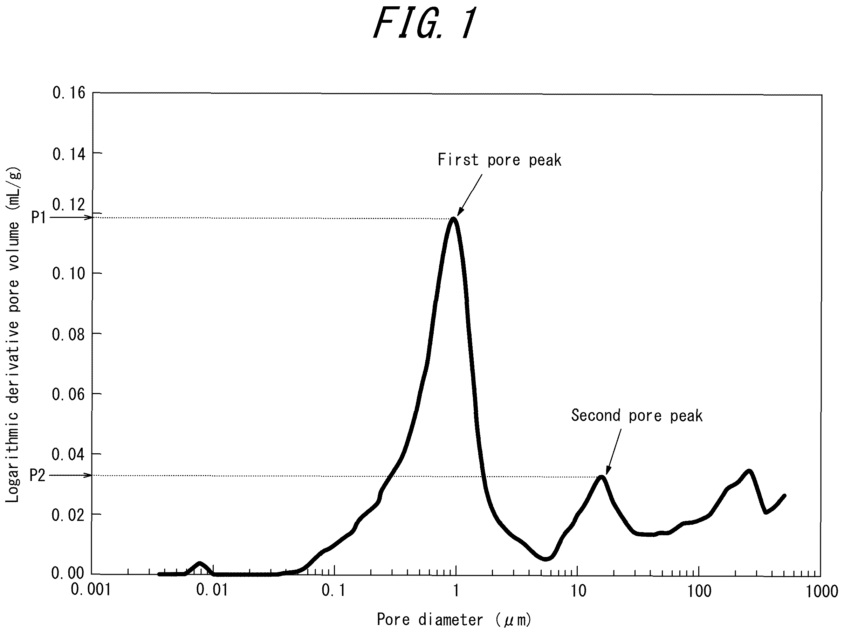

FIG. 1 is one example of a pore distribution curve indicating a relationship between pore diameter (D) and logarithmic derivative pore volume (dV/dlog D) of an electrode mixed material layer that is obtained based on mercury intrusion porosimetry.

DETAILED DESCRIPTION

The following provides a detailed description of embodiments of the present disclosure.

Presently disclosed composite particles are used in dry forming of an electrode (electrode for a secondary battery) of a secondary battery such as a non-aqueous secondary battery or an all-solid-state secondary battery. Moreover, a presently disclosed electrode for a secondary battery is used as an electrode of a secondary battery. Furthermore, a presently disclosed secondary battery includes either or both of an electrode that includes an electrode mixed material layer formed using the presently disclosed composite particles and the presently disclosed electrode for a secondary battery.

(Composite particles)

The presently disclosed composite particles contain an electrode active material and a binder and optionally further contain a conductive additive and other components. Features of the presently disclosed composite particles are that the presently disclosed composite particles have an area circularity of not less than 0.50 and not more than 0.93 and a porosity of not less than 65% and not more than 80%.

As a result of the presently disclosed composite particles containing an electrode active material and a binder and having an area circularity and a porosity that are within the ranges set forth above, it is possible to produce an electrode having excellent flexibility and a secondary battery having excellent battery characteristics by using these composite particles in dry forming of an electrode. Although it is not certain why the effects described above are achieved by using the presently disclosed composite particles, the reason is presumed to be as follows.

Firstly, the presently disclosed composite particles are composite particles that are used in dry forming of an electrode for a secondary battery and that contain an electrode active material and a binder. In an electrode mixed material layer of an electrode that is produced through dry forming using such composite particles, there are thought to be pores present in-between the electrode active material and there are also thought to be larger pores present in-between the composite particles. In addition, the presently disclosed composite particles have a comparatively small area circularity of 0.93 or less. This inhibits dense packing of the composite particles in an electrode mixed material layer of an electrode that is produced through dry forming using the presently disclosed composite particles, and thus can increase the aforementioned pores that are present in-between the composite particles. The presence of the two types of pores described above in the electrode mixed material layer and the abundance of large pores in-between composite particles are thought to act in combination to impart excellent flexibility to an electrode that is produced through dry forming using the presently disclosed composite particles.

Moreover, the area circularity of the presently disclosed composite particles is 0.50 or more. When the area circularity is not less than the lower limit set forth above, the composite particles can be said to have a shape with comparatively few irregularities and have excellent fluidity. Furthermore, the porosity of the presently disclosed composite particles is not less than 65% and not more than 80%. When the porosity is within the range set forth above, the composite particles can be said to have a structure in which pores are abundant. The high fluidity and structure in which pores are abundant act in combination to enable rearrangement of composite particles to form a surface with few irregularities when an electrode is produced through dry forming using the presently disclosed composite particles. Consequently, it is possible to inhibit excessive pressing pressure from acting on protruding sections of the composite particles and to reduce cracking of electrode active material due to the pressing pressure. Moreover, a secondary battery that includes an electrode having reduced electrode active material cracking in this manner is thought to have excellent battery characteristics such as initial capacity and preservation stability.

Therefore, by using the presently disclosed composite particles, it is possible to produce an electrode having excellent flexibility through dry forming. Moreover, by using this electrode, it is possible to cause a secondary battery to display excellent battery characteristics.

<Electrode active material>

The electrode active material is a material that gives and receives electrons in an electrode of a secondary battery.

Examples of positive electrode active materials that may be used include, but are not specifically limited to, known positive electrode active materials such as lithium-containing cobalt oxide ($LiCoO_2$), lithium manganate ($LiMn_2O_4$), lithium-containing nickel oxide ($LiNiO_2$), a lithium-containing complex oxide of Co-Ni-Mn, ($Li(Co\ Mn\ Ni)O_2$), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a $Li_2MnO_3$-$LiNiO_2$-based solid solution, a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$. Of these positive electrode active materials, a lithium-containing complex oxide of Co-Ni-Mn ($Li(Co\ Mn\ Ni)O_2$) and olivine-type lithium iron phosphate ($LiFePO_4$) are preferable.

Note that one of the above-described positive electrode active materials may be used individually, or two or more of the above-described positive electrode active materials may be used in combination.

Examples of negative electrode active materials that may be used include, but are not specifically limited to, known negative electrode active materials such as carbon-based active materials, silicone-based active materials, simple substances of metals that form a lithium alloy, and alloys of these simple substances of metals.

Note that one of the above-described negative electrode active materials may be used individually, or two or more of the above-described negative electrode active materials may be used in combination.

<<Volume-average particle diameter>>

The volume-average particle diameter of the electrode active material is preferably 0.03 $\mu$m or more, more preferably 0.5 $\mu$m or more, and even more preferably 1 $\mu$m or more, and is preferably 500 $\mu$m or less, more preferably 200 $\mu$m or less, and even more preferably 20 $\mu$m or less. When the volume-average particle diameter of the electrode active material is not less than any of the lower limits set forth above, initial capacity of a secondary battery can be sufficiently ensured, and battery characteristics of the secondary battery can be even further enhanced. Moreover, when the volume-average particle diameter of the electrode active material is not more than any of the upper limits set forth above, an increase of initial resistance of a secondary battery can be suppressed, and battery characteristics of the secondary battery can be even further enhanced.

Note that the "volume-average particle diameter" of the electrode active material referred to in the present disclosure is the particle diameter (D50) at which, in a particle size distribution (by volume) measured by laser diffraction, cumulative volume calculated from a small diameter end of the distribution reaches 50%.

<<Proportional content>>

The proportional content of the electrode active material in the composite particles when the total mass of the composite particles is taken to be 100 mass% is preferably 80 mass% or more, more preferably 85 mass% or more, even more preferably 90 mass% or more, and particularly preferably 95 mass% or more, and is preferably 99 mass% or less, and more preferably 98 mass% or less. When the proportional content of the electrode active material in the composite particles is not less than any of the lower limits set forth above, initial capacity of a secondary battery can be sufficiently ensured, and battery characteristics of the secondary battery can be even further enhanced. Moreover, when the proportional content of the electrode active material in the composite particles is not more than any of the upper limits set forth above, an increase of initial resistance of a secondary battery can be suppressed, and battery characteristics of the secondary battery can be even further enhanced.

<Binder>

The binder is a component that has adhesive capability and is a component that can hold components such as the electrode active material that are contained in the composite particles so that these components are not shed from the composite particles and that enables good binding of an electrode mixed material layer formed from the presently disclosed composite particles to a current collector in an electrode that has been produced through dry forming using the composite particles.

Any polymer can be used without any specific limitations as the binder that is contained in the presently disclosed composite particles so long as it is a polymer with which it is possible to keep the area circularity and the porosity of the composite particles within the specific ranges set forth above. Note that one binder may be used individually, or two or more binders may be used in combination.

Moreover, it is preferable that a conjugated diene polymer is used as the binder from a viewpoint of further improving flexibility of an electrode.

<<Conjugated diene polymer>>

The term "conjugated diene polymer" refers to a polymer that includes a conjugated diene monomer unit or a hydrogenated product of such a polymer. Specific examples of conjugated diene polymers include, but are not specifically limited to, a copolymer that includes an aromatic vinyl monomer unit and an aliphatic conjugated diene monomer unit such as an aromatic vinyl-aliphatic conjugated diene block copolymer, butadiene rubber (BR), acrylic rubber (NBR) (copolymer including an acrylonitrile unit and a butadiene unit), and hydrogenated products thereof. Of these conjugated diene polymers, a copolymer that includes an aromatic vinyl monomer unit and an aliphatic conjugated diene monomer unit is preferable, and an aromatic vinyl-aliphatic conjugated diene block copolymer is more preferable.

The aromatic vinyl-aliphatic conjugated diene block polymer may, for example, be a block copolymer that includes a block region formed of an aromatic vinyl monomer unit (hereinafter, also referred to simply as an "aromatic vinyl block region") and a region including an aliphatic conjugated diene monomer unit and/or an alkylene structural unit.

Note that when a polymer is said to "include a block region formed of a monomer unit" in the present disclosure, this means that "a section where only this monomer unit is bonded consecutively as a repeating unit is present in the polymer".

Examples of aromatic vinyl monomers that can form the constituent aromatic vinyl monomer unit of the aromatic vinyl block region include styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene is preferable. Note that although one of these aromatic vinyl monomers may be used individually or two or more of these aromatic vinyl monomers may be used in combination, it is preferable that one of these aromatic vinyl monomers is used individually.

The proportion constituted by the aromatic vinyl monomer unit in the polymer when the amount of all repeating units (monomer units and structural units) in the polymer is taken to be 100 mass% is preferably 10 mass% or more, and more preferably 15 mass% or more, and is preferably 50 mass% or less, more preferably 40 mass% or less, and even more preferably 30 mass% or less. When the proportion constituted by the aromatic vinyl monomer unit in the polymer is 10 mass% or more, binding capacity between a current collector and the composite particles can be improved. On the other hand, when the proportion constituted by the aromatic vinyl monomer unit in the polymer is 50 mass% or less, flexibility of the polymer is ensured, and flexibility of an electrode can be further improved.

Note that the proportional content of a monomer unit in a polymer referred to in the present disclosure can be measured by a nuclear magnetic resonance (NMR) method such as $^1$H-NMR.

Examples of aliphatic conjugated diene monomers that can form the aliphatic conjugated diene monomer unit include conjugated diene compounds having a carbon number of 4 or more such as 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination. Of these aliphatic conjugated diene monomers, isoprene is preferable.

Note that the aliphatic conjugated diene monomer unit in the polymer may be cross-linked. However, it is preferable that the aliphatic conjugated diene monomer unit in the polymer is not cross-linked from a viewpoint of ensuring flexibility of the polymer and further improving flexibility of an electrode.

The alkylene structural unit is a repeating unit that is composed of only an alkylene structure represented by a general formula: $-C_nH_{2n}-$ (n is an integer of 2 or more).

The alkylene structural unit may be linear or branched. Moreover, the carbon number of the alkylene structural unit is preferably 4 or more (i.e., n in the preceding general formula is preferably an integer of 4 or more).

No specific limitations are placed on the method by which the alkylene structural unit is introduced into the polymer. For example, a method in which the polymer is obtained through hydrogenation of a polymer that includes a block region formed of an aromatic vinyl monomer unit and also includes an aliphatic conjugated diene monomer unit so to convert the aliphatic conjugated diene monomer unit to an alkylene structural unit is preferable since it is easy to produce the polymer.

The aliphatic conjugated diene monomer used in the above-described method may, for example, be any of the conjugated diene compounds having a carbon number of 4 or more that were described above as aliphatic conjugated diene monomers that can form the aliphatic conjugated diene monomer unit, of which, isoprene is preferable. In other words, the alkylene structural unit is preferably a structural unit obtained through hydrogenation of an aliphatic conjugated diene monomer unit (i.e., a hydrogenated aliphatic conjugated diene unit), and is more preferably a structural unit obtained through hydrogenation of isoprene (i.e., a hydrogenated isoprene unit). Selective hydrogenation of the aliphatic conjugated diene monomer unit can be carried out by a commonly known method such as an oil-layer hydrogenation method or a water-layer hydrogenation method.

The total amount of the aliphatic conjugated diene monomer unit and the alkylene structural unit in the polymer when the amount of all repeating units (monomer units and structural units) in the polymer is taken to be 100 mass% is preferably 50 mass% or more, more preferably 60 mass% or more, and even more preferably 70 mass% or more, and is preferably 90 mass% or less, and more preferably 85 mass% or less. When the total proportion constituted by the aliphatic conjugated diene monomer unit and the alkylene structural unit in the polymer is within any of the ranges set forth above, flexibility of the polymer is ensured, and flexibility of an electrode can be further improved.

<<Proportional content>>

The proportional content of the binder in the composite particles when the total mass of the composite particles is taken to be 100 mass% is preferably 0.1 mass% or more, more preferably 0.25 mass% or more, and even more preferably 0.5 mass% or more, and is preferably 10 mass% or less, more preferably 5 mass% or less, and even more preferably 2 mass% or less. When the proportional content of the binder in the composite particles is not less than any of the lower limits set forth above, binding capacity between a current collector and the composite particles can be improved. Moreover, when the proportional content of the binder in the composite particles is not more than any of the upper limits set forth above, battery characteristics of a secondary battery can be even further enhanced.

<<Production method of binder>>

No specific limitations are placed on the method by which the binder formed of the above-described polymer is produced. For example, the polymer that is used as the binder can be produced through polymerization of a monomer composition containing the above-described monomers. The proportional content of each monomer in the monomer composition used in production of the polymer can be set in accordance with the proportional content of each repeating unit in the polymer.

A method such as solution polymerization, suspension polymerization, bulk polymerization, or emulsion polymerization can be adopted as the mode of polymerization without any specific limitations. Moreover, the polymerization method can be any type of addition polymerization such as ionic polymerization, radical polymerization, or living radical polymerization.

<Conductive additive>

The conductive additive that can optionally be contained in the presently disclosed composite particles is not specifically limited and examples thereof include conductive carbon materials such as carbon black (acetylene black, Ketjenblack® (Ketjenblack is a registered trademark in Japan, other countries, or both), furnace black, etc.), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber, and fibers, foils, and the like of various metals. Of these examples, carbon black is preferable as the conductive additive.

Note that one of the above-described conductive additives may be used individually, or two or more of the above-described conductive additives may be used in combination.

<<Proportional content>>

In a case in which the composite particles contain a conductive additive, the proportional content of the conductive additive in the composite particles when the total mass of the composite particles is taken to be 100 mass% is preferably 0.1 mass% or more, more preferably 0.5 mass% or more, and even more preferably 1 mass% or more, and is preferably 10 mass% or less, more preferably 5 mass% or less, and even more preferably 3 mass% or less. When the proportional content of the conductive additive in the composite particles is within any of the ranges set forth above, electrical contact among the electrode active material can be promoted, and battery characteristics of a secondary battery can be even further enhanced.

<Other components>

Examples of other components that can be contained in the composite particles include, but are not specifically limited to, defoamers, preservatives, antioxidants, reinforcing materials, leveling agents, viscosity modifiers, and additives for electrolyte solution. Commonly known examples of such other components can be used without any specific limitations so long as they do not affect battery reactions. One other component can be used individually, or two or more other components can be used in combination.

The proportional content of other components in the composite particles when the total mass of the composite particles is taken to be 100 mass% is preferably 1 mass% or less, and more preferably 0.5 mass% or less. When the proportional content of other components in the composite particles is not more than any of the upper limits set forth above, battery characteristics of a secondary battery can be even further enhanced.

Note that a solvent that has been used in the production process may remain in the composite particles. The proportional content of a solvent in the composite particles when the total mass of the composite particles is taken to be 100 mass% is preferably 5 mass% or less, more preferably 1 mass% or less, even more preferably 0.1 mass% or less, and particularly preferably 0 mass% (i.e., it is particularly preferable that the composite particles do not contain a solvent).

<Area circularity>

The presently disclosed composite particles are required to have an area circularity of not less than 0.50 and not more than 0.93. The area circularity of the composite particles is preferably 0.60 or more, more preferably 0.70 or more, even more preferably 0.80 or more, further preferably 0.85 or more, and particularly preferably 0.89 or more. In a situation in which the area circularity of the composite particles is less than 0.50, this makes it easier for excessive pressing pressure to act on protruding sections of the composite particles in situations such as in formation of an electrode mixed material layer through pressure forming of the composite particles because of increased irregularities at the surfaces of the composite particles. Consequently, cracking of the electrode active material increases, and battery characteristics of a secondary battery deteriorate. On the other hand, in a situation in which the area circularity of the composite particles is more than 0.93, this reduces pores in-between the composite particles in an electrode mixed material layer and reduces flexibility of an electrode.

Note that the area circularity of the composite particles can be adjusted by altering the method and/or conditions of granulation of the composite particles, for example. Specifically, the area circularity of the obtained composite particles can be reduced by adopting fluidized bed granulation or stirred granulation as the granulation method of the composite particles. Moreover, in a case in which fluidized bed granulation is adopted as the granulation method of the composite particles, the area circularity of the obtained composite particles can also be reduced by adopting a side spraying method in which spraying is performed from the side of a fluidized bed instead of a top spraying method in which spraying is performed from above a fluidized bed.

<Porosity>

The presently disclosed composite particles are required to have a porosity of not less than 65% and not more than 80%. The porosity of the composite particles is preferably 67% or more, more preferably 69% or more, and even more preferably 72% or more, and is preferably 78% or less, and more preferably 76% or less. In a situation in which the porosity of the composite particles is less than 65%, rearrangement of the composite particles during formation of an electrode mixed material layer through pressure forming of the composite particles becomes difficult due to reduction of fluidity of the composite particles. Consequently, cracking of the electrode active material during pressure forming increases, and battery characteristics of a secondary battery deteriorate. On the other hand, in a situation in which the porosity of the composite particles is more than 80%, it becomes difficult to maintain the shape of the composite particles.

Note that the porosity of the composite particles can be adjusted by altering the method and/or conditions of granulation of the composite particles, for example. More specifically, the porosity of the obtained composite particles can be increased by adopting fluidized bed granulation as the granulation method of the composite particles. Moreover, in a case in which stirred granulation is adopted as the granulation method of the composite particles, the porosity of the obtained composite particles can be increased by increasing the air speed of stirring air.

<Angle of repose>

The angle of repose of the presently disclosed composite particles is preferably 25° or more, more preferably 27° or more, even more preferably 30° or more, further preferably 32° or more, and particularly preferably 33° or more, and is preferably 45° or less, more preferably 42° or less, and even more preferably 40° or less. When the angle of repose of the composite particles is not less than any of the lower limits set forth above, rearrangement of the composite particles during formation of an electrode mixed material layer through pressure forming of the composite particles becomes easier due to an increase of pores in-between the composite particles. Consequently, cracking of the electrode active material during pressure forming can be reduced, and battery characteristics of a secondary battery can be even further enhanced. Moreover, when the angle of repose of the composite particles is not more than any of the upper limits set forth above, deformation of the composite particles during pressure forming can be reduced.

Note that the "angle of repose" of the composite particles referred to in the present disclosure can be measured by a method described in the EXAMPLES section of the present specification.

<Volume-average particle diameter>

The volume-average particle diameter of the presently disclosed composite particles is preferably 20 $\mu$m or more, more preferably 40 $\mu$m or more, and even more preferably 60 $\mu$m or more, and is preferably 250 $\mu$m or less, more preferably 200 $\mu$m or less, and even more preferably 150 $\mu$m or less. When the volume-average particle diameter of the composite particles is not less than any of the lower limits set forth above, rearrangement of the composite particles during formation of an electrode mixed material layer through pressure forming of the composite particles becomes easier due to an increase of fluidity of the composite particles. Consequently, cracking of the electrode active material during pressure forming can be reduced, and battery characteristics of a secondary battery can be even further enhanced. Moreover, when the volume-average particle diameter of the composite particles is not more than any of the upper limits set forth above, it is easier to adjust an electrode to a desired thickness.

Note that the volume-average particle diameter of the composite particles can be adjusted by altering the amount and/or type of electrode active material used to produce the composite particles or the method and/or conditions of granulation of the composite particles, for example. For example, the volume-average particle diameter of the obtained composite particles can be reduced by using an electrode active material having a small volume-average particle diameter as the electrode active material used in production of the composite particles.

<Production method of composite particles>

The presently disclosed composite particles can be produced through a step of dissolving and/or dispersing the above-described binder and the optional conductive additive and other components in a solvent to prepare a binder-containing liquid (preparation step) and a step of granulating composite particles from the obtained binder-containing liquid and the above-described electrode active material (granulation step), for example, but are not specifically limited to being produced in this manner. Note that a step of further classifying the composite particles (classification step) and/or a step of removing the solvent from the composite particles (drying step) may optionally be performed after the granulation step.

<<Preparation step>>

Any solvent can be used without any specific limitations as the solvent that is used in the preparation step so long as it is a solvent in which components such as the above-described binder can be dissolved or dispersed. In particular, cyclohexane, decane, n-hexane, acetone, methyl ethyl ketone, ethyl acetate, tetrahydrofuran, methylene chloride, chloroform, or the like may be used as the solvent. Of these solvents, it is preferable to use cyclohexane or decane, and more preferable to use cyclohexane. Note that one solvent may be used individually, or two or more solvents may be used in combination in a freely selected ratio.

No specific limitations are placed on the method by which the above-described components are mixed. For example, the mixing can be performed using a mixing device. The mixing device can be a ball mill, a sand mill, a pigment disperser, a grinding machine, an ultrasonic disperser, a homogenizer, a Homo Mixer, a homogenizing disper, a planetary mixer, or the like, for example.

The solid content concentration of the binder-containing liquid is preferably 1 mass% or more, and more preferably 3 mass% or more, and is preferably 10 mass% or less, and more preferably 7 mass% or less. When the solid content concentration of the binder-containing liquid is within any of the ranges set forth above, components that are contained in the binder-containing liquid can be uniformly dispersed.

<<Granulation step>>

The method of granulation in the granulation step is not specifically limited and may be fluidized bed granulation, stirred granulation, tumbling bed granulation, or the like, for example. In particular, from a viewpoint of further improving flexibility of an electrode while also even further enhancing battery characteristics of a secondary battery, fluidized bed granulation, stirred granulation, or a combination thereof is preferable, and fluidized bed granulation is more preferable. Note that stirred granulation is more preferable for limiting cost and increasing production efficiency.

[Stirred granulation]

In stirred granulation, the electrode active material is placed in a stirred state through enforced stirring using an agitator or the like that is provided in a granulation tank, and the binder-containing liquid that has been obtained in the preparation step is sprayed against the electrode active material from a sprayer or the like to perform agglomeration granulation and thereby granulate composite particles.
The method of stirring of the electrode active material is not specifically limited, and the electrode active material may be stirred and placed in a stirred state by a commonly known method. Note that stirring of the electrode active material is preferably performed by a dry process (i.e., under conditions in which a liquid medium such as water is not present).
Moreover, during stirring of the electrode active material, it is preferable that stirring air is blown. The air speed of the stirring air is preferably 1 L/min or more, more preferably 5 L/min or more, and even more preferably 20 L/min or more, and is preferably 100 L/min or less, and more preferably 75 L/min or less. When the air speed of the stirring air is within any of the ranges set forth above, flexibility of an obtained electrode can be further improved.

[Fluidized bed granulation]

In fluidized bed granulation, the electrode active material is fluidized through hot air blown up from below, and the binder-containing liquid that has been obtained in the preparation step is sprayed against the electrode active material from a sprayer or the like to perform agglomeration granulation and thereby granulate composite particles.
The method of fluidization of the electrode active material is not specifically limited, and the electrode active material may be fluidized by a commonly known method.
The method of spraying of the binder-containing liquid against the fluidized bed may be a top spraying method in which the binder-containing liquid is sprayed from above the fluidized bed, a side spraying method in which the binder-containing liquid is sprayed from the side of the fluidized bed, or the like. In particular, it is preferable to adopt a side spraying method from a viewpoint of even further enhancing battery characteristics of a secondary battery.
The temperature of the hot stirring air in fluidization of the electrode active material is preferably 30°C or higher, and more preferably 40°C or higher, and is preferably 80°C or lower, and more preferably 60°C or lower.

<<Classification step>>

In the classification step, the composite particles that have been obtained through the granulation step are further subjected to classification. The method of classification in the classification step is not specifically limited and may be a dry classification method such as gravitational classification, inertial classification, or centrifugal classification, a wet classification method such as sedimentary classification, mechanical classification, or hydraulic classification, or a sieving classification method using a sieving screen such as a vibrating sieve or an in-plane motion sieve. Of these methods, a sieving classification method is preferable. By performing the classification step, rearrangement of the composite particles during formation of an electrode mixed material layer through pressure forming of the composite particles becomes easier due to an increase of fluidity of the composite particles. Consequently, cracking of an electrode active material during pressure forming can be reduced, and battery characteristics of a secondary battery can be even further enhanced.

<<Drying step>>

The method by which the solvent in the composite particles is removed in the drying step is not specifically limited, and the solvent in the composite particles may be removed through drying of the composite particles by a commonly known method.

(Electrode for secondary battery)

The presently disclosed electrode normally includes a current collector and an electrode mixed material layer formed on the current collector. Moreover, the electrode mixed material layer is formed using composite particles that contain at least an electrode active material and a binder.

Features of the presently disclosed electrode are that a pore distribution curve for the electrode mixed material layer that is obtained based on mercury intrusion porosimetry has a first pore peak within a pore diameter range of not less than 0.1 $\mu$m and less than 5 $\mu$m and a second pore peak within a pore diameter range of not less than 5 $\mu$m and not more than 50 $\mu$m, that logarithmic derivative pore volume at a maximum of the second pore peak when logarithmic derivative pore volume at a maximum of the first pore peak is taken to be 100% (i.e., the pore peak ratio) is not less than 10% and less than 55%, and that a good product ratio of the electrode active material is 90% or more.

As a result of the presently disclosed electrode including an electrode mixed material layer formed using composite particles that contain an electrode active material and a binder and as a result of the pore distribution curve having a first pore peak and a second pore peak, the pore peak ratio being within the range set forth above, and the good product ratio of the electrode active material being not less than the value set forth above, the presently disclosed electrode has excellent flexibility. Moreover, by using the presently disclosed electrode, it is possible to cause a secondary battery to display excellent battery characteristics. Although it is not certain why the effects described above are achieved by using the presently disclosed electrode, the reason is presumed to be as follows.

Firstly, the presently disclosed electrode includes an electrode mixed material layer that is formed using composite particles containing an electrode active material and a binder. The inclusion of an electrode mixed material layer that is formed using such composite particles is thought to result in the presently disclosed electrode having excellent flexibility and being able to cause a secondary battery to display excellent battery characteristics.

In addition, a pore distribution curve for the electrode mixed material layer of the presently disclosed electrode that is obtained based on mercury intrusion porosimetry has a first pore peak and a second pore peak that are within specific pore diameter ranges. The first pore peak at a small pore diameter is thought to originate from pores in-between the electrode active material that is contained in the electrode mixed material layer, whereas the second pore peak at a larger pore diameter than the first pore peak is thought to originate from pores in-between the composite particles that are contained in the electrode mixed material layer. In the presently disclosed electrode, logarithmic derivative pore volume at a maximum of the second pore peak when logarithmic derivative pore volume at a maximum of the first pore peak is taken to be 100% (i.e., the pore peak ratio) is not less than 10% and less than 55%. Through the pore peak ratio being within the range set forth above, the presently disclosed electrode can be said to have sufficient pores in-between the composite particles in the electrode mixed material layer. The presence of two types of pores of different sizes in the electrode mixed material layer and the sufficient abundance of large pores (pores in-between composite particles) as described above are thought to act in combination to provide the presently disclosed electrode with excellent flexibility.

Moreover, in the presently disclosed electrode, a good product ratio of the electrode active material is 90% or more. In other words, the proportion of electrode active material having a surface arithmetic mean roughness (Ra) of 5 $\mu$m or less among electrode active material that is at least partially exposed at the surface of the electrode is 90% or more. Through the good product ratio of the electrode active material being 90% or more, the presently disclosed electrode can be said to have a small proportion of electrode active material that has undergone cracking in a production process of the electrode, for example. Furthermore, a secondary battery that includes an electrode having little cracking of electrode active material in this manner is thought to have excellent battery characteristics.

Accordingly, the presently disclosed electrode has excellent flexibility and can cause a secondary battery to display excellent battery characteristics.

<Electrode mixed material layer>

The electrode mixed material layer is a layer that is formed using composite particles as previously described. In other words, the electrode mixed material layer contains an electrode active material and a binder and optionally further contains a conductive additive and other components.

<<Composite particles>>

Any composite particles can be used as the composite particles used to form the electrode mixed material layer of the presently disclosed electrode without any specific limitations so long as they contain an electrode active material and a binder. For example, the presently disclosed composite particles that contain the previously described electrode active material and binder and that optionally contain a conductive additive and other components can suitably be used as the composite particles. The use of the presently disclosed composite particles set forth above as the composite particles used to form the electrode mixed material layer enables good production of the presently disclosed electrode in which a pore distribution curve for the electrode mixed material layer obtained based on mercury intrusion porosimetry has a first pore peak and a second pore peak, the pore peak ratio is within the range set forth above, and the good product ratio of the electrode active material is not less than the value set forth above.

Note that the preferred proportional content and attributes of each component (electrode active material, binder, conductive additive, etc.) in the electrode mixed material layer are the same as the preferred proportional content and attributes of each component in the presently disclosed composite particles set forth above.

\<Current collector>

The current collector is a material having electrical conductivity and electrochemical durability. Specifically, the current collector may, for example, be made of a metal material such as iron, copper, aluminum, nickel, stainless steel, titanium, tantalum, gold, or platinum. In particular, a current collector formed of aluminum is preferable as a current collector for a positive electrode, whereas a current collector formed of copper is preferable as a current collector for a negative electrode.

One of these materials may be used individually, or two or more of these materials may be used in combination in a freely selected ratio.

\<Pore distribution curve>

A pore distribution curve indicating a relationship between pore diameter and logarithmic derivative pore volume of the electrode mixed material layer in the presently disclosed electrode that is obtained based on mercury intrusion porosimetry is required to have a first pore peak that is within a pore diameter range of not less than 0.1 $\mu$m and less than 5 $\mu$m and a second pore peak that is within a pore diameter range of not less than 5 $\mu$m and not more than 50 $\mu$m. In a situation in which the pore distribution curve does not have the two pore peaks described above, flexibility of the electrode decreases.

\<\<Pore peak ratio>>

The presently disclosed electrode is required to have a pore peak ratio of not less than 10% and less than 55%. The pore peak ratio is preferably 12% or more, more preferably 14% or more, and even more preferably 16% or more, and is preferably 45% or less, more preferably 35% or less, even more preferably 28% or less, further preferably 25% or less, and particularly preferably 23% or less. In a situation in which the pore peak ratio is less than 10%, flexibility of the electrode decreases. On the other hand, in a situation in which the pore peak ratio is 55% or more, battery characteristics of a secondary battery deteriorate.

Note that the pore peak ratio can be adjusted by altering the method and/or conditions of granulation of the composite particles that are used to form the electrode mixed material layer. Specifically, the pore peak ratio can be increased by adopting stirred granulation or fluidized bed granulation as the granulation method of the composite particles.

\<\<First pore peak>>

The first pore peak is required to be present within a pore diameter range of not less than 0.1 $\mu$m and less than 5 $\mu$m (i.e., a maximum of the first pore peak is present within a pore diameter range of not less than 0.1 $\mu$m and less than 5 $\mu$m). Moreover, the maximum of the first pore peak is preferably present at a pore diameter of 0.3 $\mu$m or more, more preferably present at a pore diameter of 0.5 $\mu$m or more, even more preferably present at a pore diameter of 0.7 $\mu$m or more, further preferably present at a pore diameter of 1 $\mu$m or more, and particularly preferably present at a pore diameter of 1.3 $\mu$m or more, and is preferably present at a pore diameter of 4 $\mu$m or less, more preferably present at a pore diameter of 3.5 $\mu$m or less, and even more preferably present at a pore diameter of 3 $\mu$m or less. When the maximum of the first pore peak is present within any of the ranges set forth above, flexibility of the electrode can be further improved, and battery characteristics of a secondary battery can be even further enhanced.

Moreover, the logarithmic derivative pore volume at the maximum of the first pore peak is preferably 0.05 mL/g or more, more preferably 0.075 mL/g or more, and even more preferably 0.1 mL/g or more, and is preferably 2 mL/g or less, more preferably 1.5 mL/g or less, even more preferably 1 mL/g or less, further preferably 0.5 mL/g or less, and particularly preferably 0.25 mL/g or less. When the logarithmic derivative pore volume at the maximum of the first pore peak is 0.05 mL/g or more, there is an increase of pores in-between the electrode active material that are present in the electrode mixed material layer, and flexibility of the electrode can be further improved. Moreover, when the logarithmic derivative pore volume at the maximum of the first pore peak is 2 mL/g or less, an excessive increase of pores in the electrode mixed material layer can be suppressed, and battery characteristics of a secondary battery can be even further enhanced.

<<Second pore peak>>

The second pore peak is required to be present within a pore diameter range of not less than 5 $\mu$m and not more than 50 $\mu$m (i.e., a maximum of the second pore peak is present within a pore diameter range of not less than 5 $\mu$m and not more than 50 $\mu$m). The maximum of the second pore peak is preferably present at a pore diameter of 7 $\mu$m or more, more preferably present at a pore diameter of 9.5 $\mu$m or more, and even more preferably present at a pore diameter of 11 $\mu$m or more, and is preferably present at a pore diameter of 40 $\mu$m or less, more preferably present at a pore diameter of 30 $\mu$m or less, even more preferably present at a pore diameter of 20 $\mu$m or less, and particularly preferably present at a pore diameter of 16.9 $\mu$m or less. When the maximum of the second pore peak is present within any of the ranges set forth above, flexibility of the electrode can be further improved, and battery characteristics of a secondary battery can be even further enhanced.

Moreover, the logarithmic derivative pore volume at the maximum of the second pore peak is preferably 0.01 mL/g or more, more preferably 0.015 mL/g or more, and even more preferably 0.02 mL/g or more, and is preferably 0.5 mL/g or less, more preferably 0.3 mL/g or less, even more preferably 0.2 mL/g or less, further preferably 0.1 mL/g or less, and particularly preferably 0.05 mL/g or less. When the logarithmic derivative pore volume at the maximum of the second pore peak is 0.01 mL/g or more, there is an increase of pores in-between the composite particles that are present in the electrode mixed material layer, and flexibility of the electrode can be further improved. Moreover, when the logarithmic derivative pore volume at the maximum of the second pore peak is 0.5 mL/g or less, an excessive increase of pores in the electrode mixed material layer can be suppressed, and battery characteristics of a secondary battery can be even further enhanced.

<Good product ratio>

Herein, the good product ratio of an electrode active material is defined as the proportion of electrode active material having a surface arithmetic mean roughness (Ra) of 5 $\mu$m or less among electrode active material that is at least partially exposed at the surface of an electrode. The good product ratio of the electrode active material in the presently disclosed electrode is required to be 90% or more, and is preferably 93% or more, more preferably 95% or more, and even more preferably 98% or more. In a situation in which the good product ratio of the electrode active material is less than 90%, the proportion of the electrode active material that has undergone cracking during a production process of the electrode, for example, increases, and battery characteristics of a secondary battery deteriorate. The upper limit for the good product ratio of the electrode active material is not specifically limited and can be set as 100% or less, or can be set as 99% or less, for example.

Note that the good product ratio of the electrode active material can be adjusted by altering the type of electrode active material, the properties of the composite particles (porosity, area circularity, etc.), the method and/or conditions of formation of the electrode mixed material layer, and so forth. Specifically, the good product ratio of the electrode active material can be increased by increasing the strength of the electrode active material or by increasing the porosity or area circularity of the composite particles. Moreover, the good product ratio of the electrode active material can also be increased by, instead of a method in which pressing is performed just once at high pressure, adopting a method in which pressing is performed at plurality of times at lower pressure (multistage pressing) as a pressure forming method that can be used to form the electrode mixed material layer through pressure forming of the composite particles.

<Formation method of electrode>

The electrode mixed material layer that is formed from the composite particles described above can be produced by a method in which the presently disclosed composite particles set forth above are formed into a sheet shape and are then stacked on the current collector or a method in which the presently disclosed composite particles are directly pressure formed on the current collector, for example, without any specific limitations. Moreover, from a viewpoint of increasing secondary battery productivity, a method in which the composite particles are directly pressure formed on the current collector is preferable.

The pressure forming method that can be used to form the electrode mixed material layer through pressure forming of the composite particles may be (1) a roll pressure forming method in which the current collector is conveyed by rolls of a roll type pressure forming device that includes a pair of rolls while the composite particles are supplied to the roll type pressure forming device by a supplying device such as a screw feeder so as to form the electrode mixed material layer on the current collector, or (2) a method in which the composite particles are sprinkled onto the current collector, treatment (squeegeeing) of leveling the sprinkled composite particles is performed using a blade, a roller squeegee, or the like, and then pressing is performed by a pressing device, for example. Of these methods, method (2) in which pressing is performed after squeegeeing is preferable.

Note that the pressure in the pressure forming can be set as appropriate according to the target electrode density.

Moreover, from a viewpoint of reducing electrode active material cracking due to pressing and even further enhancing battery characteristics of a secondary battery, it is preferable that rather than performing pressing just once at a high pressing pressure in the pressure forming, pressing is performed a plurality of times at a lower pressing pressure (i.e., multistage pressing is performed).

(Secondary battery)

The presently disclosed secondary battery includes either or both of an electrode that includes an electrode mixed material layer formed using the presently disclosed composite particles and the presently disclosed electrode.

For example, in a case in which the presently disclosed secondary battery is a non-aqueous secondary battery, the presently disclosed non-aqueous secondary battery normally includes a positive electrode, a negative electrode, an electrolyte solution, and a separator, wherein at least one of the positive electrode and the negative electrode is an electrode that includes an electrode mixed material layer formed using the presently disclosed composite particles or is the presently disclosed electrode.

Moreover, in a case in which the presently disclosed secondary battery is an all-solid-state secondary battery, for example, the presently disclosed all-solid-state secondary battery normally includes a positive electrode, a negative electrode, and a solid electrolyte layer, wherein at least one of the positive electrode and the negative electrode is an electrode that includes an electrode mixed material layer formed using the presently disclosed composite particles or is the presently disclosed electrode.

Furthermore, as a result of the presently disclosed secondary battery including an electrode that includes an electrode mixed material layer formed using the presently disclosed composite particles and/or the presently disclosed electrode, the presently disclosed secondary battery has excellent battery characteristics such as initial capacity and preservation stability.

<Electrodes>

As described above, at least one of an electrode that includes an electrode mixed material layer formed using the presently disclosed composite particles and the presently disclosed electrode is used as at least one of a positive electrode and a negative electrode.

Any electrode for a secondary battery can be used without any specific limitations in the presently disclosed secondary battery as an electrode other than an electrode for a secondary battery that includes an electrode mixed material layer formed using the presently disclosed composite particles and other than the presently disclosed electrode for a secondary battery.

<Electrolyte solution>

An organic electrolyte solution obtained by dissolving a supporting electrolyte in an organic solvent is normally used as an electrolyte solution. For example, a lithium salt is used as a supporting electrolyte in a non-aqueous lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable, and $LiPF_6$ is particularly preferable because they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may suitably be used in the electrolyte solution of a non-aqueous lithium ion secondary battery, for example, include carbonates such as dimethyl carbonate (DMC), ethylene carbonate (EC), diethyl carbonate (DEC), propylene carbonate (PC), butylene carbonate (BC), and ethyl methyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution can be adjusted as appropriate. Furthermore, known additives may be added to the electrolyte solution.

<Separator>

Examples of separators that can be used include, but are not specifically limited to, those described in JP2012-204303A. Of these separators, a microporous membrane formed of a polyolefinic (polyethylene, polypropylene, polybutene, or polyvinyl chloride) resin is preferable in terms that the thickness of the overall separator can be reduced, thereby increasing the ratio of electrode active material particles inside the non-aqueous secondary battery and increasing the volumetric capacity.

<Production method of secondary battery>

The non-aqueous secondary battery can be produced by, for example, stacking the positive electrode and the negative electrode with the separator in-between, performing rolling, folding, or the like of the resultant stack as necessary according to the battery shape to place the stack in a battery container, injecting the electrolyte solution into the battery container, and sealing the battery container. Note that an expanded metal, an overcurrent preventing device such as a fuse or a PTC device, a lead plate, or the like can be provided in the battery container as necessary in order to prevent pressure increase inside of the battery and occurrence of overcharging or overdischarging. The shape of the battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer. In the examples and comparative examples, the following methods were used to evaluate the volume-average particle diameter, angle of repose, area circularity, and porosity of composite particles, the pore distribution of an electrode mixed material layer, the good product ratio of an electrode active material, the flexibility of an electrode, and the initial gas evolution and initial capacity of a secondary battery.

<Volume-average particle diameter of composite particles>

The volume-average particle diameter of composite particles obtained in each example or comparative example was measured by using a dry unit of a laser diffraction particle size analyzer (produced by Microtrac; product name: MT-3300EXII) to introduce 5 mL of the composite particles into a measurement section with a dispersing pressure of 0.10 MPa. In the obtained particle size distribution (by volume), the particle diameter at which cumulative volume calculated from a small diameter end of the distribution reached 50% was determined as the volume-average particle diameter ($\mu$m).

<Angle of repose of composite particles>

The angle of repose of composite particles was measured in accordance with the stipulations of "Alumina powder-Determination of physical properties 2: Angle of repose" in JIS R 9301-2-2:1999. Specifically, composite particles obtained in each example or comparative example were supplied into an A.B.D. powder characteristic meter (produced by Hosokawa Micron Corporation; product name: Powder Tester PT-S), were dropped onto a horizontal base plate from a funnel at a fixed height so as to form a conical deposit, and then the base angle of the deposit was calculated from the diameter and the height of the deposit and was taken to be the angle of repose.

<Area circularity of composite particles>

Image analysis of composite particles produced in each example or comparative example was performed based on an image analysis method in accordance with JIS Z 8827-1 to calculate specific physical properties. Specifically, a particle image analyzer (produced by Malvern Panalytical; product name: Morphologi G3) was used to perform binarization processing and analysis of images of 4,000 composite particles to determine the average area circularity. Note that definitions of terms are in accordance with "Particle characterization of particulate systems-Vocabulary" stipulated in JIS Z 8890.

Average area circularity: Average value $C_A$ of area circularity calculated by $4\pi A/P^2$ (A: projected area; P: perimeter) for 4,000 analyzed particles

<Porosity of composite particles>

The particle diameter distribution of composite particles obtained in each example or comparative example was controlled through a classification operation so as to adjust the angle of repose to within a range of not less than 30° and less than 45°. Thereafter, the composite particles that had undergone adjustment of the angle of repose to within the aforementioned range were tapped 180 times based on the fixed volume measurement method described in JIS R 1628-1997 to measure the tap density (tap bulk density stipulated in JIS R 1628-1997). The measured tap density (g/cm$^3$) and the content (mass%) and true density (g/cm$^3$) of each component in the composite particles were used to calculate the porosity (%) by the following formula.

[Math. 1]

$$\text{Porosity (\%)} = 100 - 100 \times [\text{Tap density (g/cm}^3) \sum_{k} \{\text{Content of component k (\%)} \times \text{True density of component k (g/cm}^3)/100\}]$$

Note that the content (mass%) of each component in the composite particles can be taken to be the additive amount of each component in a case in which the additive amount is known and can be measured by thermogravimetric analysis in a case in which the additive amount of each component is not known. Also note that the true density (g/cm$^3$) of each component contained in the composite particles can be measured by the Gay-Lussac specific gravity bottle (pycnometer) method. When the angle of repose of the composite particles is within a range of not less than 30° and less than 45°, the porosity of the composite particles is essentially independent of the angle of repose. In other words, adjusting the angle of repose of the composite particles to within the range set forth above in advance makes it possible to unambiguously determine the "porosity" of the composite particles.

<Pore distribution of electrode mixed material layer>

An electrode (positive electrode) produced in each example or comparative example was cut out with scissors as a measurement sample and was measured based on the mercury intrusion porosimetry method (JIS R 1655:2003) using a mercury porosimeter (produced by Micromeritics; product name: AutoPore IV 9520) under a condition of a measurement temperature of 25°C (evaluated with the surface tension of mercury taken to be 480 mN/m and the contact angle of mercury taken to be 140°). Specifically, 0.5 g of the above-described measurement sample was loaded into a cell, the measurement sample was subjected to 3 hours of degassing at 105°C under vacuum to perform pretreatment, and then mercury was introduced under reduced pressure. Thereafter, the pressure was changed and the mercury intrusion was measured. Based on the obtained data, pore diameter D ($\mu$m) was plotted on a horizontal axis (X-coordinate axis) and logarithmic derivative pore volume dV/dlog D (mL/g) was plotted on a vertical axis (Y-coordinate axis) to prepare a pore distribution curve (refer to FIG. 1). Note that the logarithmic derivative pore volume dV/dlog D (mL/g) is a value determined by differentiating the cumulative pore volume V (mL/g) by the logarithm of the pore diameter (log D). Moreover, the pore diameter D ($\mu$m) was calculated using the Washburn equation. On the pore distribution curve that was prepared in this manner, a peak for which logarithmic derivative pore volume (vertical axis value) at a maximum of the peak was largest among peaks that were present within a pore diameter (horizontal axis value) range of not less than 0.1 $\mu$m and less than 5 $\mu$m was taken to be a first pore peak, and a peak for which logarithmic derivative pore volume (vertical axis value) at a maximum of the peak was largest among peaks that were present within a pore diameter (horizontal axis value) range of not less than 5 $\mu$m and not more than 50 $\mu$m was taken to be a second pore peak. In addition, a pore peak ratio (%) was calculated by the following formula by taking the logarithmic derivative pore volume at the maximum of the first pore peak to be P1 (mL/g) and the logarithmic derivative pore volume at the maximum of the second pore peak to be P2 (mL/g).

$$\text{Pore peak ratio (\%)} = (P2/P1) \times 100$$

<Good product ratio of electrode active material>

With respect to an electrode (positive electrode) produced in each example or comparative example, 100 particles of electrode active material that were at least partially exposed at the surface of the electrode were arbitrarily selected. Moreover, with respect to the surfaces of the 100 particles of electrode active material that had been selected, a profile measurement laser microscope (produced by Keyence Corporation; product name: VK-X100) was used to draw a roughness curve, and the arithmetic mean roughness Ra of the surface was determined by the calculation method in the following formula. Note that in the formula, Lr represents the measurement length, and Zn represents the height of the measured line at an $n^{th}$ point when the height of an average line for the curve is taken to be 0.

[Math. 2]

$$Ra = \frac{1}{Lr}\int_0^{Lr} |Z_n| d_x$$

Moreover, electrode active material having a surface arithmetic mean roughness Ra of 5 μm or less was taken to be a "good product", electrode active material having a surface arithmetic mean roughness Ra of more than 5 μm was taken to be a "defective product", and the proportion constituted by "good products" among the 100 particles of electrode active material that were subjected to measurement of arithmetic mean roughness Ra was taken to be a "good product ratio (%)".

<Flexibility of electrode>

An electrode (positive electrode) produced in each example or comparative example was cut out as a rectangle of 1 cm in width by 5 cm in length to obtain a test specimen. This test specimen was placed on a desk with the surface at the electrode mixed material layer-side facing upward, and a stainless steel rod of 3 mm in diameter was set lying down in a transverse direction on the surface at the current collector-side, centrally in a longitudinal direction (position 2.5 cm from the ends). The test specimen was bent at 180° about the stainless steel rod as a center such that the electrode mixed material layer was at an outer side. The above-described test was performed for 10 test specimens, the occurrence of cracking or dusting (i.e., shedding of electrode active material, etc. from the electrode mixed material layer) at the bent section of the electrode mixed material layer of each test specimen was inspected using a ×10 magnifying glass, and a judgment was made by the following standard. Less cracking and dusting indicate that the electrode has better flexibility.

A: Cracking and dusting not observed for all 10 test specimens
B: Cracking or dusting observed for 1 out of 10 test specimens
C: Cracking or dusting observed for 2 out of 10 test specimens
D: Cracking or dusting observed for 3 out of 10 test specimens
E: Cracking or dusting observed for 4 or more out of 10 test specimens

<Initial gas evolution of secondary battery>

A lithium ion secondary battery produced in each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was subsequently subjected to 12 hours of aging at a temperature of 60°C. The lithium ion secondary battery was then discharged to a cell voltage of 2.75 V by a 0.2C constant-current method at a temperature of 25°C. Thereafter, CC-CV charging (upper limit cell voltage 4.20 V) was performed by a 0.2C constant-current method and CC discharging was performed to a cell voltage of 2.75 V by a 0.2C constant-current method.

Next, a cell volume (V0) of the lithium ion secondary battery was calculated by the Archimedean method. Thereafter, the lithium ion secondary battery was charged to a cell voltage of 4.20 V by a 0.2C constant-current method at a temperature of 25°C, was then left for 14 days under a condition of a temperature of 60 ± 2°C, and was subsequently discharged to a cell voltage of 2.75 V by a 0.2C constant-current method at a temperature of 25°C. The cell volume (V1) was subsequently measured, and the amount of evolved gas was calculated by the following formula and was evaluated by the following standard. A smaller amount of evolved gas indicates better preservation stability.

$$\text{Amount of evolved gas (mL)} = V1 \text{ (mL)} - V0 \text{ (mL)}$$

A: Amount of evolved gas of less than 0.05 mL
B: Amount of evolved gas of not less than 0.05 mL and less than 0.10 mL
C: Amount of evolved gas of not less than 0.10 mL and less than 0.15 mL
D: Amount of evolved gas of not less than 0.15 mL and less than 0.20 mL
E: Amount of evolved gas of 0.20 mL or more

<Initial capacity of secondary battery>

A lithium ion secondary battery produced in each example or comparative example was charged to 4.2 V by a constant-current constant-voltage method with a charge rate of 0.2C (1C = 40 mA), and was then discharged to 2.75 V at a discharge rate of 0.1C in order to determine the battery capacity during 0.2C discharging. The capacity per unit weight of positive electrode active material was calculated from the determined battery capacity, and this capacity was taken to be the initial capacity. The initial capacity was evaluated by the following standard.

    A: 180 mAh/g or more
    B: Not less than 175 mAh/g and less than 180 mAh/g
    C: Not less than 170 mAh/g and less than 175 mAh/g
    D: Not less than 165 mAh/g and less than 170 mAh/g
    E: Less than 165 mAh/g

(Example 1)

<Production of composite particles>

[Production of binder A]

A reactor that included a stirring device and that had been thoroughly internally purged with nitrogen was charged with 270 parts of dehydrated cyclohexane and 0.53 parts of ethylene glycol dibutyl ether, and was then further charged with 0.47 parts of n-butyllithium (15% cyclohexane solution). All contents of the reactor were stirred at 60°C while continuously adding 12.5 parts of dehydrated styrene into the reactor over 40 minutes. Once the addition was complete, all contents were further stirred in the same state at 60°C for 20 minutes. The polymerization conversion rate at this point as measured through gas chromatography of the reaction liquid was 99.5%. Next, 75.0 parts of dehydrated isoprene was continuously added to the reaction liquid over 100 minutes, and stirring was continued in the same state for 20 minutes once the addition was complete. The polymerization conversion rate at this point was 99.5%. Thereafter, 12.5 parts of dehydrated styrene was further continuously added over 60 minutes, and all contents were stirred in the same state for 30 minutes once this addition was complete. The polymerization conversion rate at this point was almost 100%. The reaction was ended through addition of 0.5 parts of isopropyl alcohol to the reaction liquid. The proportion constituted by structural units derived through 1,2- and 3,4-addition polymerization among all structural units derived from isoprene in the resultant styrene-isoprene-styrene block copolymer was 58%. Next, the polymer solution was transferred to a pressure-resistant reactor including a stirring device, and then 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added and mixed therewith. The inside of the reactor was purged with hydrogen gas, the solution was stirred while supplying hydrogen, and a hydrogenation reaction was performed at a temperature of 190°C and a pressure of 4.5 MPa for 6 hours. Once the hydrogenation reaction was complete, the reaction solution was filtered to remove the hydrogenation catalyst, and then 1.0 parts of a xylene solution having 0.1 parts of pentaerythritol tetrakis[3-(3,5-di-t-butyl-4-hydroxyphenyl)propionate] (produced by KOYO Chemical Research Center; product name: Songnox 1010), which is a phenolic antioxidant, dissolved therein was added to and dissolved in the filtrate. Cyclohexane was then further added to produce a binder A solution having a specific concentration.

[Production of binder-containing liquid]

The obtained binder A solution and carbon black (produced by Imerys; product name: Super C65) as a conductive additive were mixed in a solid content mass ratio of 1:2, cyclohexane was further added thereto, and 1 hour of stirring was performed by a homogenizing disper to yield a pre-dispersion having a concentration (solid content concentration) of 5%. Next, 2 hours of dispersing treatment was performed using a bead mill (produced by Ashizawa Finetech Ltd.; product name: LMZ-015) to yield a binder-containing liquid.

[Stirred granulation]

A composite particle production device that included a circular tube shaped vessel having an internal diameter of 180 mm and an internal capacity of 2 L as a granulation tank and that had agitators at two axes in a vertical direction (axial direction of the circular tube shaped vessel) and a horizontal direction inside of the circular tube shaped vessel (main agitator in vertical direction and auxiliary agitator in horizontal direction) was prepared. The main agitator had an inclined paddle including three main blades of 170 mm in diameter, and the auxiliary agitator had a V-type anchor blade of 30 mm in diameter. The device also had a mechanism by which feedstock was prevented from entering driving parts of the main agitator and the auxiliary agitator through sealing by air ventilation.

First, 97 parts (1,152 g) of NMC532 (lithium-containing complex oxide of Co-Ni-Mn (polycrystal); volume-average particle diameter: 10 $\mu$m) as a positive electrode active material for a lithium ion secondary battery was loaded into the granulation tank. Next, ventilation was performed at 20 L/min (ventilation rate: 10/min) with room temperature air (hereinafter, also referred to as "sealing air") for sealing driving parts of the main agitator and the auxiliary agitator, the main agitator was operated under an operating condition of a circumferential speed of 5 m/s, and the auxiliary agitator was operated under an operating condition of a circumferential speed of 6 m/s. In addition, a separate air supply nozzle was prepared, and stirring air was blown at 50 L/min. A two-fluid nozzle was used to continuously spray 720 g (3 parts in terms of solid content) of the binder-containing liquid (solid content concentration: 5%; viscosity index: 200 mPa·s; solvent: cyclohexane) against the positive electrode active material in this stirred state over 60 minutes to yield composite particles.

The volume-average particle diameter, angle of repose, area circularity, and porosity of these composite particles were evaluated. The results are shown in Table 1.

<Production of positive electrode>

The produced composite particles were sprinkled onto aluminum foil (thickness: 20 $\mu$m) serving as a current collector. A roller squeegee was applied against the sprinkled composite particles, and the composite particles were weighed so as to obtain a mixed material layer having a mass per unit area of 30 mg/cm$^2$. Thereafter, the mixed material layer was pressed once (pressing pressure: 3.5 MPa/10 cm) to form a positive electrode mixed material layer having a density of 3.3 g/cm$^3$.

The pore distribution of an electrode mixed material layer, the good product ratio of an electrode active material, and the flexibility of an electrode were evaluated with respect to this positive electrode. The results are shown in Table 1.

<Production of negative electrode>

A 5 MPa pressure-resistant vessel equipped with a stirrer was charged with 33 parts of 1,3-butadiene as an aliphatic conjugated diene monomer, 3.5 parts of itaconic acid as an acidic group-containing monomer, 63.5 parts of styrene as an aromatic vinyl monomer, 0.4 parts of sodium dodecylbenzenesulfonate as an emulsifier, 150 parts of deionized water, and 0.5 parts of potassium persulfate as a polymerization initiator. These materials were thoroughly stirred and were then heated to 50°C to initiate polymerization. At the point at which the polymerization conversion rate reached 96%, cooling was performed to quench the polymerization reaction to yield a mixture containing a particulate binder (styrene-butadiene copolymer). This mixture was adjusted to pH 8 through addition of 5% sodium hydroxide aqueous solution and was subsequently subjected to thermal-vacuum distillation to remove unreacted monomer. Thereafter, the mixture was cooled to 30°C or lower to yield a water dispersion containing a binder for a negative electrode.

Next, a planetary mixer was charged with 48.75 parts of artificial graphite and 48.75 parts of natural graphite as negative electrode active materials and 1 part of carboxymethyl cellulose as a thickener. These materials were diluted to a solid content concentration of 60% using deionized water and were subsequently kneaded at a rotation speed of 45 rpm for 60 minutes. Thereafter, 1.5 parts in terms of solid content of the water dispersion containing the binder for a negative electrode that was obtained as described above was added and kneaded therewith at a rotation speed of 40 rpm for 40 minutes. The viscosity was then adjusted to 3,000 $\pm$ 500 mPa·s (measured by B-type viscometer at 25°C and 60 rpm) through addition of deionized water to produce a slurry for a negative electrode mixed material layer.

Next, copper foil of 15 $\mu$m in thickness was prepared as a current collector. The slurry for a negative electrode mixed material layer was applied onto the copper foil such as to have a coating weight after drying of 15 mg/cm$^2$ and was dried at 60°C for 20 minutes and at 120°C for 20 minutes. Thereafter, 2 hours of heat treatment was performed at 150°C to obtain a negative electrode web. This negative electrode web was rolled by roll pressing to produce a sheet-shaped negative electrode including the copper foil and negative electrode mixed material layers (both sides) of 1.6 g/cm$^3$ in density.

<Production of lithium ion secondary battery>

The positive electrode and negative electrode described above and a separator (made of polyethylene; thickness: 12 $\mu$m) were used to produce a single-layer laminate cell (discharge capacity equivalent to 40 mAh) and were arranged inside of aluminum packing. Thereafter, a LiPF$_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) as an electrolyte solution was loaded into the aluminum packing. The aluminum packing was then closed by heat sealing at a temperature of 150°C to tightly seal an opening of the aluminum packing and thereby produce a lithium ion secondary battery. This lithium ion secondary battery was used to evaluate initial gas evolution and initial capacity. The results are shown in Table 1.

(Example 2)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 1.

<Production of composite particles>

[Production of binder A and production of binder-containing liquid]

Production of a binder A and production of a binder-containing liquid were performed in the same way as in Example 1.

[Fluidized bed granulation]

A composite particle production device that included a circular tube shaped vessel having an internal diameter of 180 mm and an internal capacity of 2 L as a granulation tank and an agitator in a vertical direction (axial direction) of the circular tube shaped vessel inside of the circular tube shaped vessel, and that also had a mechanism for blowing hot stirring air from the bottom of the granulation tank was prepared. First, 97 parts (1,152 g) of NMC532 (lithium-containing complex oxide of Co-Ni-Mn (polycrystal); volume-average particle diameter: 10 μm) as a positive electrode active material for a lithium ion secondary battery was loaded into the granulation tank. Next, the agitator was operated under an operating condition of a circumferential speed of 5 m/s, and hot stirring air (50°C; supplied amount: 200 L) was blown. A two-fluid nozzle was used to continuously spray 720 g (3 parts in terms of solid content) of the binder-containing liquid (solid content concentration: 5%; viscosity index: 200 mPa·s; solvent: cyclohexane) against the positive electrode active material in this stirred state over 60 minutes to yield composite particles. Note that a side spraying method was adopted as the spraying method and that the distance between the nozzle tip and the positive electrode active material surface was set as 0 mm.

(Example 3)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 1.

<Production of composite particles>

[Production of binder A and production of binder-containing liquid]

Production of a binder A and production of a binder-containing liquid were performed in the same way as in Example 1.

[Stirred granulation]

Stirred granulation was performed to obtain composite particles in the same way as in Example 1 with the exception that the air speed of the stirring air was changed from 50 L/min to 0 L/min.

[Classification]

The composite particles obtained through the stirred granulation described above were sieved using a sieving screen having an opening size of 125 μm in order to remove coarse particles on the sieving screen. Moreover, composite particles under the sieving screen were sieved using a sieving screen having an opening size of 20 μm in order to remove particles under that sieving screen and obtain composite particles remaining on the sieving screen.

(Example 4)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 1.

<Production of composite particles>

[Production of binder A, production of binder-containing liquid, and stirred granulation]

Production of a binder A, production of a binder-containing liquid, and stirred granulation were performed in the same way as in Example 3.

[Classification and particle mixing]

Composite particles obtained through the stirred granulation described above were divided into two portions. One of the two portions of composite particles was sieved using a sieving screen having an opening size of 125 µm in order to remove coarse particles on the sieving screen. Moreover, composite particles under the sieving screen were sieved using a sieving screen having an opening size of 45 µm in order to remove particles under that sieving screen and obtain composite particles 1 remaining on the sieving screen. Next, the other of the two portions of composite particles was sieved using a sieving screen having an opening size of 20 µm in order to remove coarse particles on the sieving screen and obtain composite particles 2 under the sieving screen. Composite particles obtained by mixing the composite particles 1 and the composite particles 2 that were obtained as described above in a mass ratio of 9:1 were used as composite particles in production of the positive electrode.

(Example 5)

Composite particles, a positive electrode, a negative electrode, and a lithium ion secondary battery were prepared or produced in the same way as in Example 1 with the exception that in production of the composite particles, single crystal NMC532 (volume-average particle diameter: 5 µm) was used instead of polycrystal NMC532 (volume-average particle diameter: 10 µm) as a positive electrode active material and the air speed of the stirring air was changed from 50 L/min to 10 L/min. Moreover, evaluations were conducted in the same manner as in Example 1. The results are shown in Table 1.

(Example 6)

Composite particles, a positive electrode, a negative electrode, and a lithium ion secondary battery were prepared or produced in the same way as in Example 1 with the exception that in production of the composite particles, olivine-type lithium iron phosphate (volume-average particle diameter: 1 µm) was used instead of NMC532 (polycrystal; volume-average particle diameter: 10 µm) as a positive electrode active material and the air speed of the stirring air was changed from 50 L/min to 10 L/min. Moreover, evaluations were conducted in the same manner as in Example 1. The results are shown in Table 1.

(Example 7)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 1.

<Production of composite particles>

[Production of binder B]

A reactor that included a stirring device and that had been thoroughly internally purged with nitrogen was charged with 270 parts of dehydrated cyclohexane and 0.53 parts of ethylene glycol dibutyl ether, and was then further charged with 0.47 parts of n-butyllithium (15% cyclohexane solution). All contents of the reactor were stirred at 60°C while continuously adding 8.8 parts of dehydrated styrene into the reactor over 40 minutes. Once the addition was complete, all contents were further stirred in the same state at 60°C for 20 minutes. The polymerization conversion rate at this point as measured through gas chromatography of the reaction liquid was 99.5%. Next, 82.4 parts of dehydrated isoprene was continuously added to the reaction liquid over 100 minutes, and stirring was continued in the same state for 20 minutes once the addition was complete. The polymerization conversion rate at this point was 99.5%. Thereafter, 8.8 parts of dehydrated styrene was further continuously added over 60 minutes, and all contents were stirred in the same state for 30 minutes once this addition was complete. The polymerization conversion rate at this point was almost 100%. The reaction was ended through addition of 0.5 parts of isopropyl alcohol to the reaction liquid. The proportion constituted by structural units derived through 1,2- and 3,4-addition polymerization among all structural units derived from isoprene in the resultant styrene-isoprene-styrene block copolymer was 58%. Next, the polymer solution was transferred to a pressure-resistant reactor including a stirring device, and then 7.0 parts of nickel catalyst supported on diatomaceous earth carrier (produced by JGC Catalysts and Chemicals Ltd.; product name: E22U; supported nickel content: 60%) as a hydrogenation catalyst and 80 parts of dehydrated cyclohexane were added and mixed therewith. The inside of the reactor was purged with hydrogen gas, the solution was stirred while supplying hydrogen, and a hydrogenation reaction was performed at a temperature of 190°C and a pressure of 4.5 MPa for 6 hours. Once the hydrogenation reaction was complete, the reaction solution was filtered to remove the hydrogenation catalyst, and then 1.0 parts of a xylene solution having 0.1 parts of pentaerythritol tetrakis[3-(3,5-di-t-butyl-4-hydroxyphenyl)propionate] (produced by KOYO Chemical Research Center; product name: Songnox 1010), which is a phenolic antioxidant, dissolved therein was added to and dissolved in the filtrate. Cyclohexane was then further added to produce a binder B solution having a specific concentration.

[Production of binder-containing liquid and stirred granulation]

Production of a binder-containing liquid and stirred granulation were performed to produce composite particles in the same way as in Example 1 with the exception that the binder B solution obtained as described above was used and that the air speed of the stirring air was changed from 50 L/min to 10 L/min.

(Example 8)

A negative electrode and a lithium ion secondary battery were prepared or produced in the same way as in Example 1 with the exception that composite particles and a positive electrode produced as described below were used. Moreover, evaluations were conducted in the same manner as in Example 1. The results are shown in Table 1.

<Production of composite particles>

[Production of binder A]

Production of a binder A was performed in the same way as in Example 1.

[Production of binder-containing liquid]

A binder-containing liquid (solid content concentration: 5%; viscosity index: 200 mPa·s) was produced in the same way as in Example 1 with the exception that a mixed solvent of cyclohexane and decane (cyclohexane/decane = 95%/5% (mass ratio)) was used instead of cyclohexane.

[Stirred granulation]

Stirred granulation was performed to obtain composite particles containing decane (wet granulated product) in the same way as in Example 1 with the exception that the binder-containing liquid obtained as described above was used and that the air speed of the stirring air was changed from 50 L/min to 0 L/min.

<Production of positive electrode>

A positive electrode was produced in the same way as in Example 1 with the exception that the composite particles (wet granulated product) produced as described above were used and that the positive electrode was dried at 120°C for 20 minutes after roller squeegeeing.

(Example 9)

Composite particles, a positive electrode, a negative electrode, and a lithium ion secondary battery were prepared or produced in the same way as in Example 1 with the exception that the number of repetitions of pressing (pressing pressure) was changed from one (3.5 MPa/10 cm) to two (2 MPa/10 cm) in production of the positive electrode for a lithium ion secondary battery. Moreover, evaluations were conducted in the same manner as in Example 1. The results are shown in Table 1.

(Example 10)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 2.

<Production of composite particles>

[Production of binder A, production of binder-containing liquid, and stirred granulation]

Production of a binder A, production of a binder-containing liquid, and stirred granulation were performed in the same way as in Example 8.

[Drying]

Composite particles containing decane (wet granulated product) obtained by the stirred granulation described above were dried at 120°C for 20 minutes in order to remove decane in the wet granulated product and obtain composite particles.

(Example 11)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 2.

<Production of composite particles>

[Production of binder A and production of binder-containing liquid]

Production of a binder A and production of a binder-containing liquid were performed in the same way as in Example 1.

[Stirred granulation]

Stirred granulation was performed to obtain composite particles in the same way as in Example 1 with the exception that the air speed of the stirring air was changed from 50 L/min to 0 L/min.

[Classification]

The composite particles obtained through the stirred granulation described above were sieved using a sieving screen having an opening size of 45 $\mu$m in order to remove coarse particles on the sieving screen and obtain composite particles under the sieving screen.

(Comparative Example 1)

A negative electrode and a lithium ion secondary battery were prepared or produced in the same way as in Example 1 with the exception that a positive electrode produced as described below was used. Moreover, evaluations were conducted in the same manner as in Example 1. The results are shown in Table 2.

<Production of positive electrode for lithium ion secondary battery>

A slurry for a positive electrode mixed material layer was obtained by mixing 97 parts of NMC532 (polycrystal; volume-average particle diameter: 10 $\mu$m) as a positive electrode active material, 2 parts of carbon black (produced by Imerys; product name: Super C65) as a conductive additive, 1 part in terms of solid content of polyvinylidene fluoride as a binder, and cyclohexane as a solvent, adjusting these materials to a total solid content concentration of 70%, and mixing these materials in a planetary mixer.

The obtained slurry for a positive electrode mixed material layer was applied onto aluminum foil of 20 $\mu$m in thickness serving as a current collector by a comma coater such as to have a mass per unit area after drying of 30 mg/cm$^2$.

The slurry for a positive electrode mixed material layer was dried by conveying the aluminum foil inside of a 60°C oven for 2 minutes at a speed of 0.5 m/min. Thereafter, 2 minutes of heat treatment was performed at 120°C to obtain a positive electrode web.

The positive electrode web was rolled by roll pressing to obtain a positive electrode having a positive electrode mixed material layer density of 3.3 g/cm$^3$.

(Comparative Example 2)

Composite particles, a positive electrode, a negative electrode, and a lithium ion secondary battery were prepared or produced in the same way as in Example 1 with the exception that the air speed of the stirring air was changed from 50 L/min to 0 L/min in production of the composite particles. Moreover, evaluations were conducted in the same manner as in Example 1. The results are shown in Table 2.

(Comparative Example 3)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 2.

<Production of composite particles>

[Production of binder A]

Production of a binder A was performed in the same way as in Example 1.

[Production of slurry for composite particles]

A slurry for composite particles having a solid content concentration of 60% and a viscosity of 1,020 mPa·s was obtained by mixing 97 parts of NMC532 (polycrystal; volume-average particle diameter: 10 μm) as a positive electrode active material, 2 parts of carbon black (produced by Imerys; product name: Super C65) as a conductive additive, 1 part in terms of solid content of the binder A as a binder, and cyclohexane as a solvent, and then performing stirred mixing of these materials at a temperature of 25 ± 3°C and a rotation speed of 50 rpm.

[Spray drying]

The slurry for composite particles obtained as described above was used to perform granulation by a spray drying method. The spray granulation was performed using a spray dryer and a rotating disk atomizer and with a hot air temperature of 50°C.

(Comparative Example 4)

Composite particles, a positive electrode, a negative electrode, and a lithium ion secondary battery were prepared or produced in the same way as in Example 2 with the exception that a top spraying method was adopted instead of a side spraying method as the method of spraying the binder-containing liquid in production of the composite particles. Moreover, evaluations were conducted in the same manner as in Example 1. The results are shown in Table 2.

(Comparative Example 5)

Composite particles and a positive electrode were prepared or produced in the same way as in Example 2 with the exception that in production of the composite particles, a top spraying method was adopted instead of a side spraying method as the method of spraying the binder-containing liquid and the supplied amount of the hot stirring air was changed from 200 L to 300 L. Moreover, evaluations were conducted in the same manner as in Example 1. Note that evaluations of an electrode and a secondary battery were not performed because the composite particles were noticeably damaged during production of the positive electrode. The results are shown in Table 2.

(Comparative Example 6)

A positive electrode, a negative electrode, and a lithium ion secondary battery were prepared or produced in the same way as in Example 1 with the exception that composite particles produced as described below were used. Moreover, evaluations were conducted in the same manner as in Example 1. The results are shown in Table 2.

<Production of composite particles>

[Production of binder A and production of binder-containing liquid]

Production of a binder A and production of a binder-containing liquid were performed in the same way as in Example 1.

[Stirred granulation]

Stirred granulation was performed to obtain composite particles in the same way as in Example 1 with the exception that the air speed of the stirring air was changed from 50 L/min to 0 L/min.

[Classification]

The composite particles obtained through the stirred granulation described above were sieved using a sieving screen having an opening size of 20 μm in order to remove coarse particles on the sieving screen and obtain composite particles under the sieving screen.
In Tables 1 and 2, shown below:

"NMC-M" indicates NMC532 (lithium-containing complex oxide of Co-Ni-Mn (polycrystal));
"NMC-S" indicates NMC532 (lithium-containing complex oxide of Co-Ni-Mn (single crystal));
"LFP" indicates olivine-type lithium iron phosphate;
"PVDF" indicates polyvinylidene fluoride;
"CB" indicates carbon black;
"Stirring" indicates stirred granulation;
"Fluidized bed" indicates fluidized bed granulation;
"dV/dlog D" indicates logarithmic derivative pore volume; and
"Pore peak ratio" indicates logarithmic derivative pore volume at maximum of second pore peak when logarithmic derivative pore volume at maximum of first pore peak is taken to be 100%.

[Table 1]

| | | | Example 1 | Example 2 | Example 3 | Example 4 | Example 5 | Example 6 | Example 7 | Example 8 | Example 9 |
|---|---|---|---|---|---|---|---|---|---|---|---|
| Composite particles | Electrode active material | Type | NMC-M | NMC-M | NMC-M | NMC-M | NMC-S | LFP | NMC-M | NMC-M | NMC-M |
| | | Amount [parts by mass] | 97 | 97 | 97 | 97 | 97 | 97 | 97 | 97 | 97 |
| | | Volume-average particle diameter [$\mu$m] | 10 | 10 | 10 | 10 | 5 | 1 | 10 | 10 | 10 |
| | Binder | Type | Binder A | Binder A | Binder A | Binder A | Binder A | Binder A | Binder B | Binder A | Binder A |
| | | Amount [parts by mass] | 1 | 1 | 1 | 1 | 1 | 1 | 1 | 1 | 1 |
| | Conductive additive | Type | CB | CB | CB | CB | CB | CB | CB | CB | CB |
| | | Amount [parts by mass] | 2 | 2 | 2 | 2 | 2 | 2 | 2 | 2 | 2 |
| | Volume-average particle diameter [$\mu$m] | | 75 | 75 | 75 | 75 | 75 | 40 | 75 | 320 | 75 |
| | Angle of repose [°] | | 38 | 35 | 32 | 41 | 40 | 40 | 40 | 30 | 38 |
| | Area circularity [-] | | 0.90 | 0.93 | 0.88 | 0.88 | 0.92 | 0.92 | 0.92 | 0.93 | 0.92 |
| | Tap density [g/cm$^3$] | | 1.2 | 1.1 | 1.4 | 1.4 | 1.4 | 1.2 | 1.4 | 1.4 | 1.2 |
| | Porosity [%] | | 72 | 74 | 68 | 68 | 68 | 65 | 68 | 68 | 72 |
| | Production method | Granulation step | Stirring | Fluidized bed (side spraying) | Stirring | Stirring | Stirring | Stirring | Stirring | Stirring | Stirring |
| | | Other steps | - | - | Classification | Classification + particle mixing | - | - | - | - | - |

| | | | Example 1 | Example 2 | Example 3 | Example 4 | Example 5 | Example 6 | Example 7 | Example 8 | Example 9 |
|---|---|---|---|---|---|---|---|---|---|---|---|
| Electrode | First pore peak | Pore diameter [μm] | 2.3 | 2.3 | 2.3 | 2.3 | 1.1 | 0.2 | 2.3 | 2.3 | 2.3 |
| | | dV/dlog D [mL/g] | 0.12 | 0.12 | 0.12 | 0.12 | 0.8 | 1.7 | 0.12 | 0.12 | 0.12 |
| | Second pore peak | Pore diameter [μm] | 16.9 | 14.0 | 14.0 | 10.0 | 16.9 | 9.0 | 14.0 | 5.0 | 16.9 |
| | | dV/dlog D [mL/g] | 0.028 | 0.022 | 0.018 | 0.022 | 0.24 | 0.31 | 0.030 | 0.01 | 0.03 |
| | Pore peak ratio [%] | | 23 | 18 | 15 | 18 | 30 | 18 | 25 | 10 | 23 |
| | Density of electrode mixed material layer [g/cm³] | | 3.3 | 3.3 | 3.3 | 3.3 | 3.3 | 2.6 | 3.3 | 3.3 | 3.3 |
| | Good product ratio [%] | | 95 | 99 | 95 | 95 | 95 | 99 | 95 | 95 | 98 |
| | Production method | | Squeegeeing + pressing | Squeegeeing + pressing | Squeegeeing + pressing | Squeegeeing + pressing | Squeegeeing + pressing | Squeegeeing + pressing | Squeegeeing + pressing | Squeegeeing + pressing + drying | Squeegeeing + (multistage) pressing |
| Evaluation | Flexibility | | A | A | B | B | B | B | A | C | A |
| | Initial gas evolution (preservation stability) | | B | A | B | B | B | B | B | C | B |
| | Initial capacity | | B | A | B | B | B | B | B | C | B |

[Table 2]

| | | | Example 10 | Example 11 | Comparative Example 1 | Comparative Example 2 | Comparative Example 3 | Comparative Example 4 | Comparative Example 5 | Comparative Example 6 |
|---|---|---|---|---|---|---|---|---|---|---|
| Composite particles | Electrode active material | Type | NMC-M | NMC-M | NMC-M | NMC-M | NMC-M | NMC-M | NMC-M | NMC-M |
| | | Amount [parts by mass] | 97 | 97 | 97 | 97 | 97 | 97 | 97 | 97 |
| | | Volume-average particle diameter [$\mu$m] | 10 | 10 | 10 | 10 | 10 | 10 | 10 | 10 |
| | Binder | Type | Binder A | Binder A | PVDF | Binder A | Binder A | Binder A | Binder A | Binder A |
| | | Amount [parts by mass] | 1 | 1 | 1 | 1 | 1 | 1 | 1 | 1 |
| | Conductive additive | Type | CB | CB | CB | CB | CB | CB | CB | CB |
| | | Amount [parts by mass] | 2 | 2 | 2 | 2 | 2 | 2 | 2 | 2 |
| | Volume-average particle diameter [$\mu$m] | | 75 | 20 | - | 75 | 40 | 55 | 20 | 10 |
| | Angle of repose [°] | | 38 | 38 | - | 38 | 30 | 42 | 45 | 38 |
| | Area circularity [-] | | 0.80 | 0.93 | - | 0.90 | 0.99 | 0.95 | 0.95 | 0.98 |
| | Tap density [g/cm$^3$] | | 1.0 | 1.2 | - | 1.6 | 2.0 | 1.0 | 0.8 | 1.2 |
| | Porosity [%] | | 72 | 72 | - | 63 | 54 | 77 | 81 | 72 |
| | Production method | Granulation step | Stirring | Stirring | - | Stirring | Spray drying | Fluidized bed (top spraying) | Fluidized bed (top spraying) | Stirring |
| | | Other steps | Drying | Classification | - | - | - | - | - | Classification |

EP 4 645 470 A1

(continued)

| | | | Example 10 | Example 11 | Comparative Example 1 | Comparative Example 2 | Comparative Example 3 | Comparative Example 4 | Comparative Example 5 | Comparative Example 6 |
|---|---|---|---|---|---|---|---|---|---|---|
| Electrode | First pore peak | Pore diameter [$\mu$m] | 2.3 | 2.3 | 2.3 | 2.3 | 2.3 | 2.3 | - | 2.3 |
| | | dV/dlog D [mL/g] | 0.12 | 0.12 | 0.12 | 0.12 | 0.12 | 0.12 | - | 0.12 |
| | Second pore peak | Pore diameter [$\mu$m] | 19.0 | 16.9 | - | 16.9 | 4.0 | 20.0 | - | 16.9 |
| | | dV/dlog D [mL/g] | 0.012 | 0.06 | - | 0.028 | 0.010 | 0.03 | - | 0.072 |
| | Pore peak ratio [%] | | 10 | 54 | - | 23 | 8 | 25 | - | 60 |
| | Density of electrode mixed material layer [g/cm$^3$] | | 3.3 | 3.3 | 3.3 | 3.3 | 3.3 | 3.3 | - | 3.3 |
| | Good product ratio [%] | | 90 | 90 | 99 | 80 | 95 | 80 | - | 80 |
| | Production method | | Squeegeeing + pressing | Squeegeeing + pressing | Application + drying | Squeegeeing + pressing | Squeegeeing + pressing | Squeegeeing + pressing | - | Squeegeeing + pressing |
| Evaluation | Flexibility | | A | A | E | B | C | B | - | C |
| | Initial gas evolution (preservation stability) | | C | C | D | E | D | D | - | D |
| | Initial capacity | | C | C | D | E | D | D | - | D |

It can be seen from Tables 1 and 2 that an electrode having excellent flexibility and a secondary battery having excellent battery characteristics (initial capacity and preservation stability) could be produced in Examples 1 to 11 in which composite particles that contained an electrode active material and a binder and that had an area circularity and a porosity within specific ranges were used.

In contrast, it can be seen that an electrode having excellent flexibility and a secondary battery having excellent battery characteristics (initial capacity and preservation stability) could not be produced in Comparative Example 1 in which composite particles were not used.

It can also be seen that a secondary battery having excellent battery characteristics (initial capacity and preservation stability) could not be produced in Comparative Example 2 in which composite particles having a porosity outside of a specific range were used, Comparative Example 3 in which composite particles having an area circularity and a porosity outside of specific ranges were used, and Comparative Examples 4 and 6 in which composite particles having an area circularity outside of a specific range were used.

It can also be seen that composite particles were noticeably damaged during dry forming of an electrode and that an electrode and a secondary battery could not be produced in Comparative Example 5 in which composite particles having an area circularity and a porosity outside of specific ranges were used.

It can be seen from Tables 1 and 2 that an electrode having excellent flexibility and a secondary battery having excellent battery characteristics (initial capacity and preservation stability) could be produced in Examples 1 to 11 in which an electrode having a pore distribution curve with a first pore peak and a second pore peak, having a pore peak ratio within a specific range, and having a good product ratio of an electrode active material within a specific range was used.

In contrast, it can be seen that an electrode having excellent flexibility and a secondary battery having excellent battery characteristics (initial capacity and preservation stability) could not be produced in Comparative Example 1 in which an electrode not including an electrode mixed material layer formed using composite particles and having a pore distribution curve without a second pore peak was used.

It can also be seen that a secondary battery having excellent battery characteristics (initial capacity and preservation stability) could not be produced in Comparative Examples 2 and 4 in which an electrode having a good product ratio of an electrode active material that was less than a specific value was used, Comparative Example 3 in which an electrode having a pore peak ratio outside of a specific range was used, and Comparative Example 6 in which an electrode having a pore peak ratio outside of a specific range and a good product ratio of an electrode active material that was less than a specific value was used.

INDUSTRIAL APPLICABILITY

According to the present disclosure, it is possible to provide composite particles used in dry forming of an electrode for a secondary battery that can improve flexibility of an electrode and that can cause a secondary battery to display excellent battery characteristics (initial capacity and preservation stability).

Moreover, according to the present disclosure, it is possible to provide an electrode for a secondary battery that has excellent flexibility and that can cause a secondary battery to display excellent battery characteristics (initial capacity and preservation stability).

Furthermore, according to the present disclosure, it is possible to provide a secondary battery that has excellent battery characteristics (initial capacity and preservation stability).

**Claims**

1. Composite particles used in dry forming of an electrode for a secondary battery, wherein

    the composite particles comprise an electrode active material and a binder,
    the composite particles have an area circularity of not less than 0.50 and not more than 0.93, and
    the composite particles have a porosity of not less than 65% and not more than 80%.

2. The composite particles according to claim 1, further comprising a conductive additive.

3. The composite particles according to claim 1, having a volume-average particle diameter of not less than 20 $\mu$m and not more than 250 $\mu$m.

4. An electrode for a secondary battery comprising an electrode mixed material layer formed using composite particles, wherein

the composite particles contain an electrode active material and a binder,

a pore distribution curve indicating a relationship between pore diameter and logarithmic derivative pore volume of the electrode mixed material layer that is obtained based on mercury intrusion porosimetry has a first pore peak and a second pore peak,

the first pore peak is a peak for which logarithmic derivative pore volume at a maximum of the peak is largest among peaks that are present within a pore diameter range of not less than 0.1 $\mu$m and less than 5 $\mu$m,

the second pore peak is a peak for which logarithmic derivative pore volume at a maximum of the peak is largest among peaks that are present within a pore diameter range of not less than 5 $\mu$m and not more than 50 $\mu$m,

the logarithmic derivative pore volume at the maximum of the second pore peak when the logarithmic derivative pore volume at the maximum of the first pore peak is taken to be 100% is not less than 10% and less than 55%, and

a good product ratio of the electrode active material is 90% or more, given that the good product ratio is defined as the proportion of electrode active material having a surface arithmetic mean roughness (Ra) of 5 $\mu$m or less among electrode active material that is at least partially exposed at a surface of the electrode for a secondary battery.

5. The electrode for a secondary battery according to claim 4, wherein the composite particles further comprise a conductive additive.

6. A secondary battery comprising either or both of:

an electrode for a secondary battery including an electrode mixed material layer formed using the composite particles according to any one of claims 1 to 3; and

the electrode for a secondary battery according to claim 4 or 5.

FIG. 1

EP 4 645 470 A1

## INTERNATIONAL SEARCH REPORT

| International application No. |
| --- |
| **PCT/JP2023/044930** |

| A. | CLASSIFICATION OF SUBJECT MATTER |
| --- | --- |

*H01M 4/525*(2010.01)i; *H01M 4/13*(2010.01)i; *H01M 4/36*(2006.01)i; *H01M 4/505*(2010.01)i; *H01M 4/62*(2006.01)i
FI: H01M4/525; H01M4/13; H01M4/36 A; H01M4/505; H01M4/62 Z

According to International Patent Classification (IPC) or to both national classification and IPC

| B. | FIELDS SEARCHED |
| --- | --- |

Minimum documentation searched (classification system followed by classification symbols)

H01M4/525; H01M4/13; H01M4/36; H01M4/505; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2010-092601 A (NIPPON ZEON CO.) 22 April 2010 (2010-04-22) | 1-6 |
| A | JP 2005-190831 A (TDK CORPORATION) 14 July 2005 (2005-07-14) | 1-6 |
| A | WO 2015/178241 A1 (NIPPON ZEON CO.) 26 November 2015 (2015-11-26) | 1-6 |
| A | JP 2017-059394 A (KABUSHIKI KAISHA TOSHIBA) 23 March 2017 (2017-03-23) | 1-6 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 February 2024** | **27 February 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2023/044930**

| Box No. III | Observations where unity of invention is lacking (Continuation of item 3 of first sheet) |

This International Searching Authority found multiple inventions in this international application, as follows:

(Invention 1) Claims 1-3 and 6
   The invention in claim 1 has a special technical feature, the invention in claims 2-3, 6 referring to claim 1 also has the same technical feature, and thus the invention classified as invention 1.
(Invention 2) Claims 4-5
   Claims 4-5 share, with claim 1 classified as invention 1, the common technical feature of composite particles containing electrode active material and binder.
   However, said technical feature does not make a contribution over the prior art in light of the disclosures of documents 1-3 and thus cannot be said to be a special technical feature. Also, there are no other the same as or corresponding special technical features between these inventions.
   In addition, claims 4-5 are not dependent on claim 1. Also, claims 4-5 are not substantially identical to or similarly closely related to any of the claims classified as invention 1.
   Thus, claims 4-5 cannot be classified as invention 1.
   Also, claims 4-5 have the above special technical feature and are thus classified as invention 2.

1. [✓] As all required additional search fees were timely paid by the applicant, this international search report covers all searchable claims.

2. [ ] As all searchable claims could be searched without effort justifying additional fees, this Authority did not invite payment of additional fees.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest**   [ ] The additional search fees were accompanied by the applicant's protest and, where applicable, the payment of a protest fee.

   [ ] The additional search fees were accompanied by the applicant's protest but the applicable protest fee was not paid within the time limit specified in the invitation.

   [✓] No protest accompanied the payment of additional search fees.

Form PCT/ISA/210 (continuation of first sheet) (July 2022)

**INTERNATIONAL SEARCH REPORT**
Information on patent family members

International application No.

**PCT/JP2023/044930**

| Patent document cited in search report | | | Publication date (day/month/year) | Patent family member(s) | | | Publication date (day/month/year) |
|---|---|---|---|---|---|---|---|
| JP | 2010-092601 | A | 22 April 2010 | (Family: none) | | | |
| JP | 2005-190831 | A | 14 July 2005 | US | 2005/0064289 | A1 | |
| | | | | KR | 10-2005-0004125 | A | |
| | | | | CN | 1577922 | A | |
| WO | 2015/178241 | A1 | 26 November 2015 | US | 2017/0040613 | A1 | |
| | | | | EP | 3147972 | A1 | |
| | | | | CN | 106233510 | A | |
| | | | | KR | 10-2017-0004973 | A | |
| JP | 2017-059394 | A | 23 March 2017 | US | 2017/0077494 | A1 | |
| | | | | EP | 3145005 | A1 | |
| | | | | CN | 106848284 | A | |

Form PCT/ISA/210 (patent family annex) (July 2022)

**REFERENCES CITED IN THE DESCRIPTION**

**Patent documents cited in the description**

- JP 2015043342 A
- JP 2012204303 A